(19) Europäisches Patentamt / European Patent Office / Office européen des brevets

(11) **EP 2 201 814 B1**

(12) **FASCICULE DE BREVET EUROPEEN**

(45) Date de publication et mention de la délivrance du brevet:
**17.04.2019 Bulletin 2019/16**

(21) Numéro de dépôt: **08842776.0**

(22) Date de dépôt: **17.10.2008**

(51) Int Cl.:
***H04W 40/18*** *(2009.01)*

(86) Numéro de dépôt international:
**PCT/FR2008/051881**

(87) Numéro de publication internationale:
**WO 2009/053657 (30.04.2009 Gazette 2009/18)**

(54) **PROCEDE DE DIFFUSION DE PAQUETS DE DONNEES DANS UN RESEAU DE NOEUDS MOBILES ET TERMINAL ASSOCIE**

VERFAHREN ZUR RUNDSENDUNG VON DATENPAKETEN IN EINEM NETZWERK AUS MOBILEN KNOTEN UND ENTSPRECHENDES ENDGERÄT

METHOD OF BROADCASTING DATA PACKETS IN A NETWORK OF MOBILE NODES AND ASSOCIATED TERMINAL

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **26.10.2007 FR 0758615**

(43) Date de publication de la demande:
**30.06.2010 Bulletin 2010/26**

(73) Titulaire: **Orange**
**75015 Paris (FR)**

(72) Inventeurs:
• **JERBI, Moez**
**92130 Issy les Moulineaux (FR)**
• **SENOUCI, Sidi-Mohammed**
**F-22300 Lannion (FR)**
• **GOURHANT, Yvon**
**F-22300 Lannion (FR)**
• **GHAMRI-DOUDANE, Yacine**
**F-92110 Clichy (FR)**

(74) Mandataire: **Desormiere, Pierre-Louis et al**
**Cabinet Beau de Loménie**
**158, rue de l'Université**
**75340 Paris Cedex 07 (FR)**

(56) Documents cités:
**WO-A-2006/072850     WO-A-2007/091219**
**DE-A1- 19 849 294     US-A1- 2006 235 967**

• **G.KORKMAZ ET AL.: "Urban Multi-Hop Broadcast Protocol for Inter-Vehicle Communications Systems" VANET'04, 1 octobre 2004 (2004-10-01), pages 76-85, XP002481596 Philadelphia, USA cité dans la demande**

**Description**

Arrière-plan de l'invention

L'invention se situe dans le domaine des réseaux de communication ad-hoc.

Plus précisément, l'invention concerne la diffusion d'informations à travers un réseau ad-hoc formé de manière dynamique par une pluralité de noeuds mobiles communicants et se déplaçant selon des voies de circulation d'un réseau géographique déterminé dans lequel chaque noeud est apte à se localiser.

L'invention trouve une utilisation privilégiée mais non limitative dans les réseaux ad-hoc véhiculaires communément dénommés VANETs (« Vehicular Ad-hoc NETworks »), dans lesquels chaque noeud de communication est constitué par un véhicule se déplaçant selon des voies de circulation d'un réseau routier et en particulier, dans des environnements urbains.

La diffusion d'informations à travers ce type de réseaux trouve de nombreuses applications, telles que la diffusion d'informations relatives au trafic routier pour les systèmes de transport intelligents (« Intelligent Transportation Systems ») afin d'améliorer la sécurité et le confort des conducteurs.

Dans un article intitulé « Urban multihop broadcast protocol for inter-vehicle communication systems » publié dans VANET' 04 : Proceedings of the 1st ACM International Workshop on Vehicular Ad Hoc Networks, Philadelphia, PA, USA : ACM Press, Sept. 2004, pp. 76-85, G. Korkmaz, E. Ekici, F. Özgüner, et Ü. Özgüner décrivent un protocole de diffusion de paquets de données par sauts multiples pour un système de communication inter-véhiculaire adapté à un environnement urbain.

Ce protocole utilise en combinaison deux types de diffusion de paquets : une diffusion locale au niveau de chaque intersection et une diffusion directionnelle entre deux intersections successives.

Ce protocole prévoit l'utilisation de répéteurs fixes placés au niveau de chaque intersection et destinés à transférer les paquets de données aux noeuds localisés au niveau d'une intersection, lors de l'étape de diffusion locale. Lorsqu'un noeud porteur d'un paquet émis par le répéteur quitte une intersection et s'engage sur une voie de circulation, celui-ci participe à l'étape de diffusion directionnelle. Lors de cette étape de diffusion directionnelle, le noeud porteur du paquet envoie le paquet à son noeud voisin le plus éloigné, qui devient un noeud émetteur et transmet à son tour le paquet à son voisin le plus éloigné, sans utiliser d'informations relatives à la topologie du réseau.

Un inconvénient de ce type d'approche est qu'elle nécessite l'installation de répéteurs fixes au niveau de chaque intersection. Cette installation est fastidieuse et peut s'avérer coûteuse notamment lorsque l'étendue du réseau routier couvert par le réseau ad hoc inter-véhiculaire est vaste.

Objet et résumé de l'invention

La présente invention permet de pallier aux inconvénients mentionnés ci-avant, en proposant un procédé de diffusion d'au moins un paquet de données dans un réseau formé par une pluralité de noeuds mobiles aptes à se déplacer dans un espace géographique.

Le procédé comprend une étape de diffusion locale au niveau d'une zone prédéterminée de l'espace géographique, appelée cellule, lors de laquelle ledit au moins un paquet de données est diffusé aux noeuds mobiles présents dans la cellule.

Conformément à la présente invention, le procédé comprend en outre :

- une étape de réception dudit au moins un paquet de données;
- une étape de sélection au cours de laquelle le noeud mobile détermine s'il est candidat à la diffusion du paquet de données dans la cellule;
- une étape d'élection du noeud candidat en tant que noeud diffuseur du paquet de données dans la cellule, en fonction d'un temps de parcours estimé du noeud candidat vers le centre de la cellule.

L'étape de diffusion locale est mise en oeuvre lorsque le noeud diffuseur se situe à proximité du centre de la cellule.

D'une part, l'étape de diffusion par un noeud diffuseur préalablement élu et localisé à proximité du centre d'une cellule permet d'émuler une infrastructure classique, en évitant l'installation et la maintenance d'équipements (répéteurs) destinés à diffuser des paquets de données. En effet, un noeud élu diffusant un paquet de données à tous ses noeuds voisins localisés au voisinage du centre d'une cellule joue ponctuellement le rôle d'un répéteur qui serait installé au centre de cette cellule

Ainsi, une cellule peut être vue comme une zone de diffusion activable par un noeud diffuseur, cette zone devenant active lorsqu'un noeud candidat est élu noeud diffuseur au niveau de la cellule et lorsqu'il existe des noeuds récepteurs du paquet localisés à l'intérieur de cette zone.

L'élection du noeud diffuseur en fonction du temps de parcours estimé permet l'activation d'une cellule à intervalles de temps réguliers et par conséquent la diffusion du paquet de données de manière périodique.

Ainsi, la présente invention apporte une solution facile à mettre en oeuvre, peu coûteuse et flexible en termes de déploiement, pour diffuser des paquets de données dans un réseau ad-hoc au niveau d'un ensemble de zones géographiques prédéfinies. La présente invention permet de diffuser des paquets de données de manière décentralisée, sans nécessiter d'échange d'informations de localisation entre les différents noeuds constitutifs du réseau.

D'autre part, l'élection d'un noeud diffuseur au niveau de chaque cellule permet de désigner un noeud unique responsable de la diffusion du paquet de données dans une zone géographique, évitant ainsi de surcharger inutilement la bande passante du réseau ad-hoc par de multiples émissions.

Selon une autre caractéristique de la présente invention, lors de ladite étape de sélection, le noeud mobile détermine qu'il est candidat à la diffusion du paquet de données à condition qu'il se dirige vers le centre de la cellule et qu'il soit localisé dans une zone d'ancrage centrée sur le centre et incluse dans la cellule.

En déterminant de manière autonome un temps d'attente qui lui est propre, chaque noeud candidat participe au processus d'élection qui s'effectue de manière distribuée/décentralisée, évitant ainsi l'installation de toute infrastructure. Ceci est particulièrement avantageux pour déployer de nouvelles zones de diffusion à travers un réseau géographique étendu.

Selon une autre caractéristique de la présente invention, lors de l'étape d'élection :

- le noeud candidat calcule un temps d'attente, la valeur du temps d'attente calculée étant d'autant plus faible que le temps de parcours estimé du noeud candidat vers le centre de la cellule est proche d'un intervalle de temps de référence prédéterminé;
- à l'issue du temps d'attente, le noeud candidat diffuse un message de notification informant qu'il est élu noeud diffuseur s'il n'a pas reçu un tel message de notification d'un autre noeud.

Ainsi, le noeud diffuseur élu au niveau d'une cellule correspond au noeud candidat susceptible d'atteindre le centre de la cellule en un temps qui est le plus proche possible de l'intervalle de temps de référence.

De manière avantageuse, l'intervalle de temps de référence prédéterminé correspond à la périodicité souhaitée de l'étape de diffusion locale.

Ainsi, le paquet de données est diffusé au bout d'une durée proche de l'intervalle de temps de référence, assurant ainsi une diffusion périodique du paquet de données localement au niveau de chaque cellule.

Selon une autre caractéristique de la présente invention, la cellule est délimitée par un rayon égal à la portée de transmission d'un noeud mobile et la zone d'ancrage est délimitée par un rayon égal à la moitié de la portée de transmission d'un noeud mobile.

De manière avantageuse, un noeud candidat venant d'être élu noeud diffuseur et se trouvant en périphérie de la zone d'ancrage, peut communiquer avec tous les noeuds localisés dans cette zone d'ancrage, et en particulier avec ceux situés en périphérie de la zone d'ancrage et diamétralement opposés au noeud élu. Ainsi, un noeud candidat peut être élu noeud diffuseur, à condition que la distance qui le sépare du centre de la cellule soit inférieure ou au plus égale à la moitié de la portée de transmission d'un noeud mobile, la zone d'ancrage ayant un diamètre égal à cette portée de transmission.

Selon une autre caractéristique de la présente invention, lors de l'étape d'élection, un noeud candidat effectue les sous-étapes suivantes :

- estimation de la durée de parcours nécessaire pour atteindre le centre de la cellule ;
- calcul d'une probabilité d'être élu en tant que noeud diffuseur au niveau de la cellule, le calcul de la probabilité étant adapté pour que la valeur de la probabilité d'être élu soit d'autant plus élevée que la durée de parcours estimée pour atteindre le centre de la cellule est proche de l'intervalle de temps de référence ; et
- calcul du temps d'attente en fonction de la probabilité d'être élu, le calcul du temps d'attente étant adapté pour que la valeur du temps d'attente soit d'autant plus faible que la probabilité d'être élu est élevée.

En élisant un noeud dont la durée de parcours estimée pour atteindre le centre de la cellule est la plus proche possible de la période de diffusion, on s'assure que lorsque le noeud élu diffuse le paquet, celui-ci se trouve à proximité du centre de la cellule.

Selon une autre caractéristique de la présente invention, la probabilité d'être élu en fonction de la durée de parcours estimée est déterminée selon une fonction de Gauss d'espérance égale à l'intervalle de temps de référence.

Cette fonction permet d'obtenir une probabilité maximale pour un noeud candidat dont la durée de parcours estimée pour atteindre le centre de la cellule correspond à l'intervalle de temps de référence et une probabilité d'autant plus faible que la valeur absolue de la différence entre la durée de parcours estimée et l'intervalle de temps de référence est élevée.

Selon une autre caractéristique de la présente invention, le temps d'attente WT est déterminé en fonction de la probabilité d'être élu, d'après la formule suivante : $WT(P_i) = WT_{Max}(1 - P_i/P_{max}) + \gamma_i$ où $WT_{Max}$ désigne le temps d'attente maximal allouable à un noeud mobile, $P_i/P_{max}$ désigne la probabilité normalisée d'être élu, et $\gamma_i$ est un nombre généré de manière aléatoire.

Ainsi, le temps d'attente est d'autant plus faible que la probabilité normalisée est proche de 1. De manière avantageuse, le nombre $\gamma_i$ généré de manière aléatoire permet d'attribuer des temps d'attente différents à des noeuds candidats ayant calculé une valeur de probabilité identique. Ceci est en particulier le cas, lorsque les temps d'attente estimés sont rigoureusement égaux ou bien de la forme suivante : $\Delta t = T \pm x$ où x est un nombre réel désignant une valeur de décalage temporel par rapport à l'intervalle de temps de référence T.

Selon une autre caractéristique de la présente invention, l'espace géographique est un réseau de circulation comprenant une pluralité de voies de circulation formant entre elles une pluralité d'intersections, et chaque cellule est associée à une intersection.

Le procédé selon l'invention est particulièrement bien adapté à des réseaux routiers denses et étendus comprenant un grand nombre d'intersections au niveau desquelles les paquets de données doivent être diffusés. Il est particulièrement avantageux de positionner un point d'ancrage au niveau du centre de chaque intersection, de manière à former une zone de diffusion au niveau de chaque intersection. En effet, dans les zones urbaines, la concentration de véhicules (noeuds mobiles) est en général la plus dense au niveau d'une intersection qui constitue un passage obligé pour la plupart des véhicules.

Le procédé de diffusion décrit ci-dessus étant réalisé de manière décentralisée au niveau de chaque noeud, la présente invention vise également un noeud mobile d'un réseau comprenant une pluralité de noeuds mobiles communicants.

Chaque noeud mobile comprend :

- des moyens de réception aptes à recevoir au moins un paquet de données ; et
- des moyens de diffusion aptes à diffuser ledit au moins un paquet de données à des noeuds mobiles situés à l'intérieur d'une zone de portée du noeud considéré.

Conformément à la présente invention, le noeud mobile comporte en outre :

- des moyens de sélection aptes à déterminer si ledit noeud mobile est candidat à la diffusion dudit paquet de données dans une zone prédéterminée d'un espace géographique associé audit réseau, appelée cellule;
- des moyens d'élection aptes à élire le noeud candidat en tant que noeud diffuseur destiné à diffuser ledit au moins un paquet de données dans la cellule, en fonction d'un temps de parcours estimé du noeud candidat vers le centre de la cellule ; et
- des moyens d'activation aptes à activer les moyens de diffusion lorsque ledit noeud diffuseur se situe à proximité du centre de la cellule.

Selon une autre caractéristique de la présente invention, les moyens de sélection sont aptes à déterminer que le noeud mobile est candidat à la diffusion du paquet de données si le noeud mobile se dirige vers le centre de la cellule et s'il est localisé dans une zone d'ancrage centrée sur le centre et incluse dans la cellule.

Selon une autre caractéristique de la présente invention, le terminal comprend en outre :

- des moyens d'estimation pour estimer la durée de parcours nécessaire pour atteindre le centre de la cellule ;
- des premiers moyens de calcul pour calculer une probabilité d'être élu en tant que noeud diffuseur au niveau de la cellule, les premiers moyens de calcul étant adaptés à calculer une valeur de probabilité qui est d'autant plus élevée que la durée de parcours estimée pour atteindre le centre de la cellule est proche de l'intervalle de temps de référence; et
- des deuxièmes moyens de calcul pour calculer un temps d'attente en fonction de la probabilité d'être élu, les deuxièmes moyens de calcul étant adaptés à calculer une valeur de temps d'attente qui est d'autant plus faible que la probabilité d'être élu est élevée.

Ainsi, les deuxièmes moyens de calcul permettent de calculer un temps d'attente dont la valeur est d'autant plus faible que le temps de parcours estimé du noeud candidat pour atteindre le centre de la cellule est proche de l'intervalle de temps de référence prédéterminé.

Selon une autre caractéristique de la présente invention, les premiers moyens de calcul sont adaptés à déterminer la valeur de la probabilité d'être élu en fonction de la durée de parcours estimée selon une fonction de Gauss d'espérance égale à l'intervalle de temps de référence.

Selon une autre caractéristique de la présente invention, les deuxièmes moyens de calcul sont adaptés à déterminer le temps d'attente en fonction de la probabilité d'être élu, d'après la formule suivante : $WT(P) = WT_{Max}(1 - P/P_{max}) + \gamma$ où $WT_{Max}$ désigne le temps d'attente maximal allouable à un noeud mobile, $P/P_{max}$ désigne la probabilité normalisée d'être élu, et $\gamma$ est un nombre généré de manière aléatoire.

La présente invention vise également un système de communication sans fil comprenant une pluralité de noeuds mobiles, lesdits noeuds se déplaçant selon des voies de circulation d'un réseau de circulation déterminé, ledit système étant caractérisé en ce que chaque noeud est un noeud mobile selon la présente invention tel que décrit ci-dessus.

En variante, les différentes étapes du procédé de diffusion de paquets de données décrit ci-avant sont déterminées par des instructions de programmes d'ordinateurs.

En conséquence, l'invention vise également un programme d'ordinateur exécuté sur des moyens de traitement (processeur) d'un terminal, le programme comportant des instructions pour l'exécution des étapes du procédé de diffusion de paquets de données décrit ci-dessus, lorsque ce programme est exécuté par un ordinateur.

Ce programme peut utiliser n'importe quel langage de programmation et être sous la forme de code source, de code objet, ou de code intermédiaire entre code source et code objet, tel que dans une forme partiellement compilée, ou dans n'importe quelle autre forme souhaitable.

L'invention vise également un support d'enregistrement lisible par un ordinateur sur lequel est enregistré un programme d'ordinateur comprenant des instructions pour l'exécution des étapes du procédé de diffusion de paquets de données décrit ci-avant, lorsque ledit programme est exécuté sur un ordinateur et plus particulièrement sur des moyens de traitement (processeur) d'un terminal communicant sans fil.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé de routage de paquets de données selon l'invention.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif et sur lesquels :

- la figure 1 illustre de manière schématique un réseau routier urbain à travers lequel circulent les noeuds d'un réseau ad-hoc et dans lequel la présente invention est mise en oeuvre ;
- la figure 2 illustre sous forme d'organigramme, les étapes du procédé selon l'invention mises en oeuvre pour la diffusion locale d'un paquet de données au niveau d'une intersection du réseau routier ;
- la figure 3 illustre de manière schématique, un exemple de scénario dans lequel un ensemble de noeuds candidats est sélectionné pour l'élection d'un noeud diffuseur au niveau d'une intersection, conformément à la présente invention ;
- la figure 4 illustre sous forme d'organigramme, les étapes du procédé selon l'invention mises en oeuvre pour l'élection d'un noeud diffuseur au niveau d'une intersection parmi les noeuds candidats sélectionnés, conformément à la présente invention ;
- la figure 5A illustre sous forme graphique, un premier exemple de la probabilité d'élection d'un noeud candidat conformément à la présente invention ;
- la figure 5B illustre sous forme graphique, un deuxième exemple de la probabilité d'élection d'un noeud candidat conformément à la présente invention ;
- la figure 5C illustre sous forme graphique, le nombre de noeuds mobiles dans une file d'attente au niveau d'une zone périphérique d'une intersection en fonction du temps d'arrivée d'un noeud ;
- la figure 6 illustre de manière schématique, un exemple de scénario dans lequel un noeud diffuseur est élu au niveau d'une intersection;
- la figure 7 illustre de manière schématique, un exemple de scénario dans lequel un paquet de données est diffusé par le noeud diffuseur élu au niveau d'une intersection et une étape de propagation directionnelle du paquet est amorcée vers des intersections voisines ; et
- la figure 8 illustre de manière schématique, la diffusion du paquet de données entre deux intersections successives, lors de l'étape de propagation directionnelle.

Description détaillée d'un mode de réalisation

La présente invention va être maintenant décrite de manière détaillée, dans le cadre d'un réseau ad-hoc inter-véhiculaire (VANET : « Vehicular Ad-Hoc Networks ») formé par une pluralité de noeuds mobiles se déplaçant dans un espace géographique constitué par un réseau routier en zone urbaine.

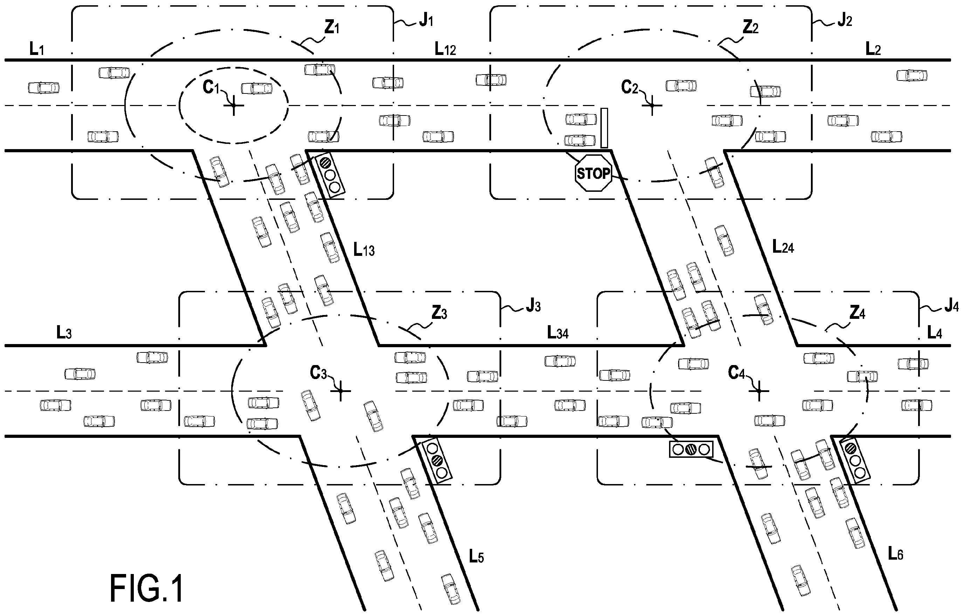

La figure 1 représente de manière schématique un réseau routier comprenant une pluralité de voies de circulations $L_1$, $L_{12}$, $L_{13}$, $L_2$, $L_3$, $L_{34}$, $L_{24}$, $L_4$, $L_5$, $L_6$ formant entre elles une pluralité d'intersections $J_1$, $J_2$, $J_3$, $J_4$. Dans cet exemple illustratif, les voies de circulation sont représentées rectilignes. Toutefois, la présente invention s'applique indifféremment à toute configuration de réseau routier comportant des voies de circulation curvilignes et formant entre elles des angles quelconques.

Chaque noeud mobile membre du réseau ad-hoc inter-véhiculaire est constitué par un véhicule apte à se déplacer le long des voies de circulation $L_1$, $L_{12}$, $L_{13}$, $L_2$, $L_3$, $L_{34}$, $L_{24}$, $L_4$, $L_5$, $L_6$ et à travers les intersections $J_1$, $J_2$, $J_3$, $J_4$ du réseau routier.

Chaque noeud est apte à se localiser à tout instant dans le réseau routier. Pour cela, chaque véhicule est équipé d'un appareil conventionnel de navigation assistée par satellite comprenant au moins :

- un récepteur, par exemple de type GPS (« Global Positioning System ») ou Galileo, permettant d'obtenir à chaque instant ses propres coordonnées géographiques ; et
- une carte routière numérique représentative du réseau routier couplée au récepteur GPS pour visualiser la position instantanée du noeud mobile sur la carte routière.

On pourrait également envisager, dans un autre mode de réalisation, que ces informations de localisation soient transmises au noeud mobile par un équipement dédié du réseau.

Chaque noeud est équipé d'un terminal de communication sans fil, constitué par exemple, d'un émetteur/récepteur Wi-Fi™, de sorte que chaque noeud est apte à communiquer avec ses noeuds voisins selon le protocole IEEE 802.11. En particulier, le terminal de communication est apte à diffuser des paquets de données. L'accès au canal de communication est géré de manière classique selon la fonction DCF (« Distributed Coordination Function ») du protocole IEEE 802.11.

Le terminal de communication sans fil embarqué dans le noeud mobile peut bien sûr fonctionner selon toute autre technologie sans fil, telle que la technologie infrarouge par exemple.

Par la suite, le terme « noeud voisin » d'un noeud de référence désignera tout noeud situé dans le domaine de portée de transmission du noeud de référence. A titre d'exemple, le domaine de portée de transmission d'un noeud mobile est délimité par un rayon de portée fixé à 250 mètres d'après les recommandations du standard DSRC (« Dedicated Short Range Communications »).

Comme représenté sur la figure 1, un point d'ancrage virtuel $C_1$, $C_2$, $C_3$, $C_4$ de coordonnées géographiques fixes est défini au centre de chaque intersection notée respectivement $J_1$, $J_2$, $J_3$, $J_4$. Chaque point d'ancrage virtuel $C_1$, $C_2$, $C_3$, $C_4$ est identifiable par tout noeud mobile, au moyen de son appareil de navigation. En particulier, à l'approche d'un point d'ancrage virtuel, chaque noeud est apte à déterminer la distance qui le sépare de ce point d'ancrage virtuel, à partir de ses propres coordonnées géographiques instantanées et de celles du point d'ancrage virtuel.

Une cellule de couverture $Z_1$, $Z_2$, $Z_3$, $Z_4$ de rayon égal à la portée de transmission d'un noeud mobile (R=250 m) est définie au niveau de chaque intersection $J_1$, $J_2$, $J_3$, $J_4$, de sorte que le centre d'une cellule de couverture coïncide avec un point d'ancrage virtuel $C_1$, $C_2$, $C_3$, $C_4$. Ainsi, par la suite, le terme « point d'ancrage virtuel » désignera le centre d'une cellule de couverture. Chaque cellule de couverture $Z_1$, $Z_2$, $Z_3$, $Z_4$ délimite une zone de diffusion locale, dans laquelle un paquet de données est destiné à être diffusé par un noeud diffuseur à des instants de diffusion intervenant périodiquement.

L'intervalle de temps de référence T entre deux instants de diffusion successifs est préalablement déterminé au niveau de chaque point d'ancrage virtuel. Dans cet exemple, on suppose que l'intervalle de temps de référence T est le même pour tous les points d'ancrage virtuels, de sorte que chaque paquet de données est diffusé au niveau de chaque intersection avec une même périodicité.

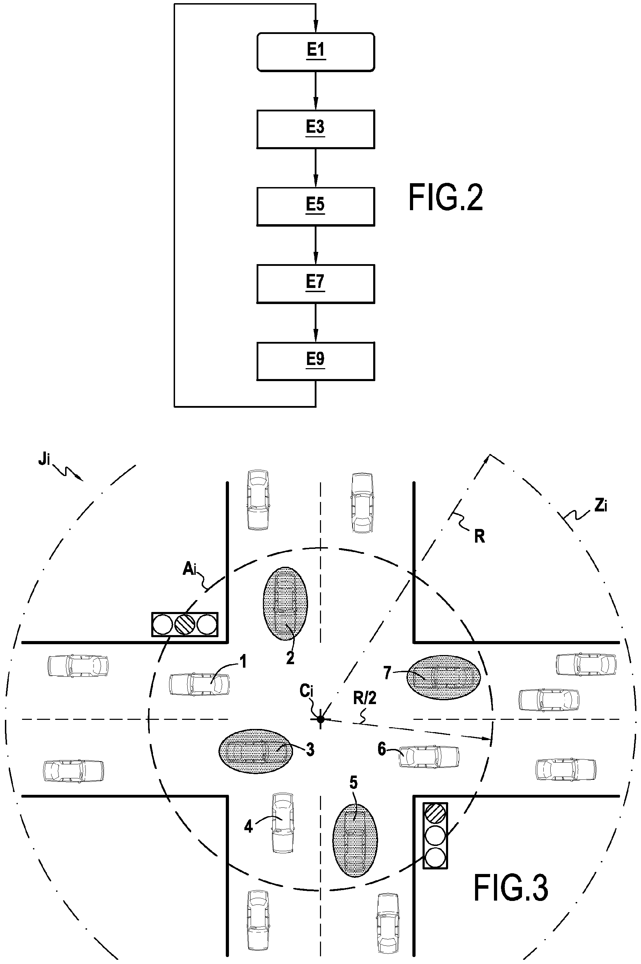

Les étapes du procédé selon l'invention mises en oeuvre pour la diffusion locale d'un paquet de données D au niveau d'une intersection $J_i$ vont être maintenant décrites en référence aux figures 2 et 3.

Lors d'une étape de réception $E_1$, un paquet de données D à diffuser est reçu par l'ensemble des noeuds situés dans la cellule de couverture $Z_i$ de l'intersection $J_i$.

Dans cet exemple, on suppose que le paquet de données D est initialement inséré dans le réseau ad-hoc par une borne de diffusion fixe (non représentée) installée au bord d'une voie de circulation. Cette borne est située par exemple au niveau d'un point d'entrée d'une zone urbaine, de sorte que des noeuds entrant dans cette zone transportent le paquet de données D vers des intersections.

Lors d'une étape de sélection $E_3$, un ensemble de noeuds candidats 2, 3, 5, 7 à l'élection d'un noeud diffuseur est sélectionné au niveau de l'intersection $J_i$, le noeud diffuseur ayant pour fonction de diffuser le paquet de données D dans la cellule de couverture $Z_i$.

Lors de l'étape de sélection $E_3$, chaque noeud porteur du paquet de données D s'attribue le statut de noeud candidat, à condition qu'il se dirige vers le point d'ancrage virtuel $C_i$ et qu'il soit localisé dans une zone d'ancrage $A_i$ incluse dans la cellule de couverture $Z_i$, suite à la réception du paquet de données D lors de l'étape de réception $E_1$.

Par définition, la zone d'ancrage $A_i$ est une zone centrée sur le point d'ancrage virtuel $C_i$ et délimitée par un rayon R/2 égal à la moitié du rayon R de la cellule de couverture $Z_i$, c'est-à-dire à la moitié de la portée de transmission d'un noeud mobile (R/2 = 125 mètres), comme représenté sur la figure 3.

Ainsi, sur réception du paquet de données D, chaque noeud porteur du paquet de données D, détermine s'il est localisé dans la zone d'ancrage $A_i$. Pour cela, il vérifie au moyen de son appareil de navigation, si la distance qui le sépare du point d'ancrage virtuel $C_i$ est inférieure à R/2 (moitié de la portée de transmission d'un noeud). En cas de vérification positive, le noeud détermine au moyen de son appareil de navigation, s'il se déplace en direction du point d'ancrage virtuel Q. Si tel est le cas, le noeud s'attribue le statut de noeud candidat. Tel est le cas des noeuds référencés 2, 3, 5, 7 localisés dans la zone d'ancrage $A_i$, comme représente sur la figure 3. Les noeuds référencés 1, 4, 6 ne sont pas retenus en tant que noeuds candidats étant donné qu'ils s'éloignent du point d'ancrage virtuel $C_i$, bien qu'ils soient localisés dans la zone d'ancrage $A_i$.

De manière avantageuse, chaque noeud est apte à déterminer de manière autonome, s'il est candidat à l'élection du noeud diffuseur. Ainsi, la sélection des noeuds candidats s'effectue de manière totalement distribuée au niveau de chaque noeud, sans nécessiter d'échange d'informations entre les noeuds ni d'élément d'infrastructure centralisée.

Lors d'une étape d'élection $E_5$, un noeud diffuseur 7 est élu parmi l'ensemble des noeuds candidats 2, 3, 5, 7 préalablement déterminés lors de l'étape de sélection $E_3$. Cette élection s'effectue en fonction de la comparaison du temps de parcours estimé pour atteindre le point d'ancrage virtuel $C_i$ par rapport à l'intervalle de temps de référence T déterminé entre deux instants de diffusion successifs au niveau du point d'ancrage virtuel.

De manière avantageuse, l'élection du noeud diffuseur 7 pour assurer la diffusion du paquet de données D dans la cellule de couverture $Z_i$ à un instant donné, permet d'optimiser l'utilisation de la bande passante du réseau ad-hoc, en évitant que plusieurs noeuds diffusent simultanément le même paquet de données D dans la même cellule de couverture $Z_i$. Lors d'une étape de portage $E_7$, le noeud diffuseur préalablement élu porte le paquet de données D à proximité du point d'ancrage virtuel $C_i$.

Lors d'une étape de diffusion locale $E_9$, le noeud diffuseur élu diffuse le paquet de données D à tous ses noeuds voisins, lorsqu'il se trouve au voisinage du centre de l'intersection $J_i$, de sorte que tous les noeuds se trouvant à cet instant dans la cellule de couverture de l'intersection reçoivent le paquet de données D.

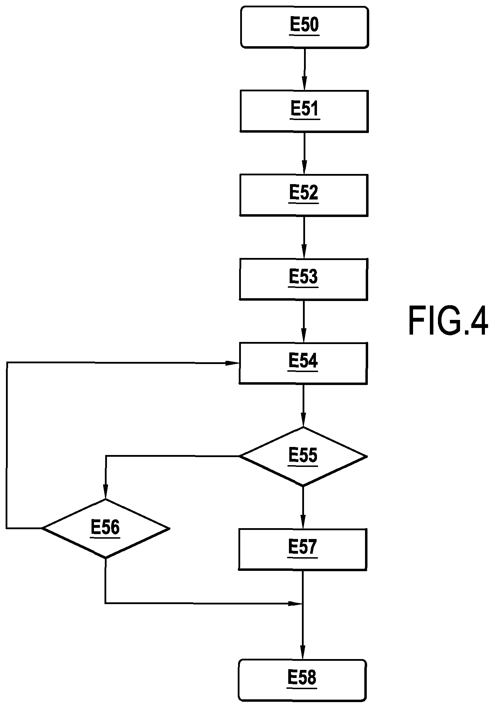

L'étape d'élection $E_5$ du noeud diffuseur 7 va maintenant être décrite de manière détaillée en référence aux figures 4, 5, 6. Cette étape d'élection $E_5$ comprend un ensemble de sous-étapes décrites en référence à la figure 4 et exécutées indépendamment par chaque noeud candidat 2, 3, 5, 7 préalablement sélectionné lors de l'étape de sélection $E_3$.

L'étape d'élection $E_5$ commence à partir du moment où un ensemble de noeuds candidats 2, 3, 5, 7 est constitué (sous-étape d'amorçage $E_{50}$) au sein de la cellule de couverture $Z_i$.

Lors d'une première sous-étape de calcul $E_{51}$, chaque noeud candidat estime une durée de parcours $\Delta t$ nécessaire pour atteindre le point d'ancrage virtuel $C_i$, tel que : $\Delta t = \Delta t_w + \Delta t_m$ où :

$\Delta t_w$ désigne le temps d'attente du noeud au niveau de la périphérie d'une intersection ; et

$\Delta t_m$ désigne le temps nécessaire pour atteindre le centre de l'intersection à partir du moment où le noeud a traversé la zone périphérique de l'intersection, ce temps étant calculé en fonction de la vitesse du noeud et de sa distance à parcourir pour atteindre le centre de l'intersection.

Le temps d'attente $\Delta t_w$ occasionné par un feu tricolore au niveau de la zone périphérique d'une intersection est calculé en fonction du temps d'arrivée $t_a$ du noeud d'après l'expression ci-dessous :

$$\Delta t_W(t_a) = \begin{cases} \dfrac{Q_0}{s} + t_r - \left(1 - \dfrac{q}{s}\right) \times t_a & si \quad 0 \le t_a \le \min(t_c, C) \\ 0 & si \quad t_a > \min(t_c, C) \end{cases}$$

(Expression 0)

$t_r$: durée d'une phase pendant laquelle le feu tricolore est rouge (secondes)

$t_g$ : durée d'une phase pendant laquelle le feu tricolore est vert (secondes)

C : durée d'un cycle (secondes)

Q(t) : longueur de la file d'attente à l'instant t (véhicules)

$Q_0$ : longueur de la file d'attente initiale (véhicules)

q : débit moyen d'arrivée au niveau du feu (véhicules /secondes)

s : débit de départ au niveau du feu (véhicules /secondes)

$t_a$ : temps d'arrivée du noeud au niveau du feu (secondes)

$t_c$ : instant à partir duquel la file d'attente est vide (secondes)

$\Delta t_w$ (t) : temps d'attente à l'instant t (secondes)

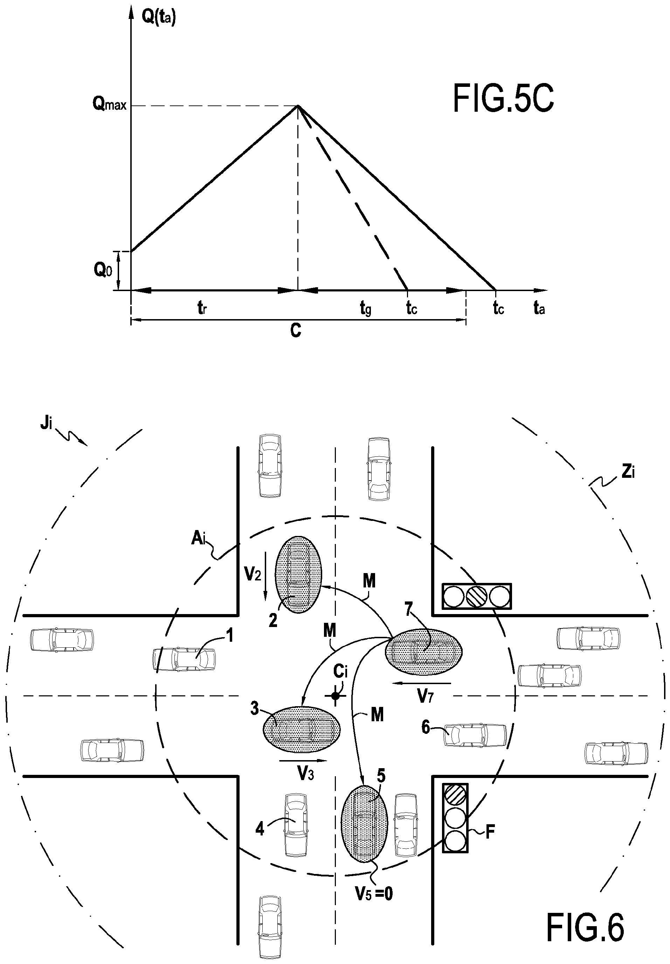

La longueur de la file d'attente Q(t) à l'instant t est un nombre de véhicules déterminé d'après la fonction représentée graphiquement sur la figure 5C. Comme illustré, un cycle de durée C est constitué des deux phases suivantes :

- une première phase de durée $t_r$, pendant laquelle le feu est rouge et pendant laquelle le nombre de véhicules dans la file d'attente augmente ;
- une deuxième phase de durée $t_g$, pendant laquelle le feu est vert et pendant laquelle le nombre de véhicules dans la file d'attente diminue.

On suppose que la file d'attente est pleine ($Q_{max}$) au moment où le feu passe du rouge au vert (changement de phase) et qu'à l'instant $t_c$, la file est vide.

Si la file d'attente se vide avant que le feu passe au rouge, la file d'attente s'est totalement vidée. Dans ce cas, le temps $t_c$ tombe dans l'intervalle de temps $t_g$ définissant la deuxième phase comme illustré sur la figure 5C et la valeur $Q_0$ = 0 au début du cycle suivant. Dans le cas contraire, $Q_0 \neq 0$.

Le temps $t_c$ est calculé d'après l'expression suivante :

$$t_c = \frac{Q_0 + q \times t_r}{s - q}$$

Pour calculer le temps $\Delta t_m$, chaque noeud candidat calcule, au moyen de son appareil de navigation, la distance qui le sépare du point d'ancrage virtuel $C_i$, à partir de ses propres coordonnées géographiques et de celles du point d'ancrage virtuel. Chaque noeud candidat calcule ensuite au moyen de son appareil de navigation, la durée de parcours $\Delta t_m$ estimée pour atteindre le point d'ancrage virtuel $C_i$, en fonction de sa vitesse de déplacement $v_i$ et de la distance qui le sépare de ce point d'ancrage virtuel $C_i$. Bien évidemment, la durée de parcours $\Delta t_m$ est d'autant plus courte que la vitesse du noeud est élevée et/ou que la distance qui le sépare du point d'ancrage virtuel $C_i$ est faible.

Ainsi les noeuds candidats référencés 2, 3, 5, 7 selon le scénario de la figure 6, déterminent de manière autonome leur temps de parcours respectif noté $\Delta t_2$, $\Delta t_3$, $\Delta t_5$, $\Delta t_7$ en fonction de leur vitesse $v_2$, $v_3$, $v_5$, $v_7$ respective et de leur distance de séparation respective par rapport au point d'ancrage virtuel $C_i$.

On considère le cas particulier, où les noeuds référencés 2 et 7 estiment des temps de parcours « symétriques » par rapport à l'intervalle de temps de référence T, de sorte que $\Delta t = T \pm x$ où x désigne un nombre réel ; ainsi, par exemple : $\Delta t_2$ = T + x et $\Delta t_7$ = T - x.

On suppose en outre qu'au moment de l'obtention de la vitesse $v_5$ du noeud 5, celui-ci est arrêté à un feu tricolore F, de sorte que sa vitesse est nulle ($v_5$=0), et que par conséquent, son temps de parcours estimé $\Delta t_5$ est supérieur à celui des autres noeuds : $\Delta t_7$ < $\Delta t_2$ < $\Delta t_5$.

Enfin, le noeud mobile 3 étant le noeud candidat le plus proche du point d'ancrage virtuel $C_i$ et se déplaçant vers celui-ci $C_i$ à une vitesse non nulle ($v_3$>0), son temps de parcours $\Delta t_3$ estimé est faible par rapport à celui des autres noeuds, tel que $\Delta t_3$ < $\Delta t_7$ < $\Delta t_2$ < $\Delta t_5$.

Lors d'une deuxième sous-étape de calcul $E_{52}$, chaque noeud candidat calcule, au moyen de son système de navigation, une probabilité d'être élu en tant que noeud diffuseur. Chaque probabilité est déterminée en fonction de la durée de parcours estimée $\Delta t$ calculée lors de la première sous-étape de calcul $E_{51}$ et en fonction de l'intervalle de temps de référence T.

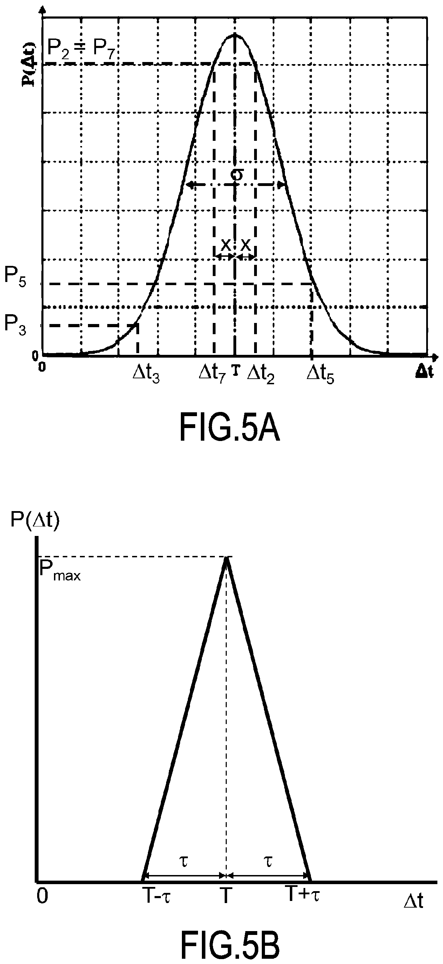

Pour cela, chaque noeud candidat 2, 3, 5, 7 calcule la probabilité d'être élu P (notée respectivement $P_2$, $P_3$, $P_5$, $P_7$) en fonction de sa durée de parcours estimée $\Delta t_i$ (notée respectivement $\Delta t_2$, $\Delta t_3$, $\Delta t_5$, $\Delta t_7$) en appliquant par exemple une fonction de Gauss classique représentée graphiquement sur la figure 5A et définie par l'expression suivante :

$$P(\Delta t_i) \equiv P_i = \frac{1}{\sigma\sqrt{2\pi}} \exp\left(-\frac{1}{2}\left(\frac{\Delta t_i - T}{\sigma}\right)^2\right) \text{(Expression 1)}$$

où $\Delta t_i$ est le temps de parcours estimé du $i^{\text{ème}}$ noeud candidat pour qu'il atteigne le point d'ancrage virtuel $C_i$ ; $\sigma$ est une constante temporelle correspondant à la largeur temporelle à mi-hauteur de la gaussienne représentative de la fonction $P(\Delta t)$ ; et T correspond à la valeur moyenne de la fonction $P(\Delta t_i)$ et désigne l'intervalle de temps de référence entre deux instants de diffusion successifs au niveau du point d'ancrage $C_i$.

La valeur de la constante temporelle $\sigma$ est définie en fonction de l'intervalle de temps de référence T et de la précision désirée pour l'élection du noeud diffuseur. Cette sélection sera d'autant plus sélective que la valeur de la constante temporelle est faible. Dans le cas extrême où $\sigma=0$, la gaussienne devient une impulsion de Dirac $\delta_T$ telle que $\delta_T(T)=1$ et $\delta_T(t)=0$ pour tout $t \neq T$. Dans ce cas, chaque noeud diffuseur est un noeud candidat pour lequel la valeur du temps de parcours estimé pour atteindre le centre de la cellule correspond précisément à celle de l'intervalle de temps de référence T. En pratique, il est peu probable de trouver pendant chaque cycle de diffusion, un noeud candidat tel que son temps de parcours estimé soit exactement égal à T. Par conséquent, la valeur de $\sigma$ sera choisie non nulle et ajustée, pour permettre à un noeud candidat dont le temps de parcours estimé est suffisamment proche de T d'être élu à chaque cycle de diffusion. La valeur de l'intervalle de temps de référence T ne pourra pas excéder une valeur de référence maximale $T_{max}$ qui correspond au temps de parcours moyen pour traverser une intersection à une vitesse moyenne. De manière générale, la valeur de T sera choisie en fonction du type d'application considérée. En particulier, pour la diffusion d'informations relatives à la sécurité routière, l'intervalle de temps de référence T sera choisi suffisamment faible pour tenir compte du caractère éphémère des informations diffusées.

Dans cet exemple, la probabilité d'être élu $P(\Delta t)$ est calculée selon une fonction de Gauss. Bien évidemment, l'homme du métier pourra utiliser toute autre fonction dont la valeur maximale est atteinte pour $\Delta t = T$ et permettant d'obtenir une valeur de probabilité d'autant plus faible que la différence $|T - \Delta t|$ est élevée.

Ainsi, selon une variante de réalisation, la probabilité P est déterminée selon une fonction « triangle » représentée graphiquement sur la figure 5B et définie par l'expression suivante :

$$P \equiv P(\Delta t) = \begin{cases} 0 & si \quad \Delta t \geq T + \tau \; ou \; 0 \leq \Delta t \leq T - \tau \\ \dfrac{P_{Max}}{\tau}\Delta t + P_{Max}\left(1 - \dfrac{T}{\tau}\right) & si \quad T - \tau < \Delta t \leq T \\ -\dfrac{P_{Max}}{\tau}\Delta t + P_{Max}\left(1 + \dfrac{T}{\tau}\right) & si \quad T \leq \Delta t < T - \tau \end{cases}$$

$$\text{(Expression 2)}$$

où $\tau$ est une constante réelle positive permettant de définir la largeur de la fonction triangle comme représenté sur la figure 5B ; $P_{Max}$ correspond à la valeur de probabilité maximale telle que $P_{Max} = P(T) = 1/\tau$ de sorte que la somme de toutes les probabilités soit égale à 1 ; et T désigne l'intervalle de temps de référence.

Dans les cas représentés sur les figures 5A et 5B, la probabilité d'être élu $P(\Delta t)$ est d'autant plus élevée que la durée de parcours estimée $\Delta t$ pour atteindre le point d'ancrage virtuel $C_i$ est proche de l'intervalle de référence T. Autrement dit, la probabilité P est d'autant plus faible que la différence $|T - \Delta t|$ est élevée. Ceci permet d'élire un noeud diffuseur dont la durée de parcours estimée pour atteindre le centre d'une cellule de couverture est d'autant plus proche de T.

Etant donné que les noeuds candidats 2 et 7 ont des temps de parcours estimés $\Delta t_2 = T + x$ et $\Delta t_7 = T - x$ respectivement, ces noeuds candidats 2 et 7 déterminent une probabilité d'être élu identique : $P_2 \equiv P(\Delta t_2) = P_7 \equiv P(\Delta t_7)$, comme illustré sur la figure 5A. Ainsi, les probabilités d'être élu pour les noeuds candidats 2, 3, 5, 7 représentés sur la figure 6 sont telles que $P_3 \equiv P(\Delta t_3) < P(\Delta t_5) < P_2 = P_7$ comme illustré sur la figure 5A.

Lors d'une troisième sous-étape de calcul $E_{53}$, chaque noeud candidat calcule, au moyen de son appareil de navigation, un temps d'attente $WT_i$ en fonction de la probabilité d'être élu $P_i \equiv P(\Delta t_i)$ obtenue à l'issue de la deuxième sous-étape de calcul ($E_{52}$). Le temps d'attente $WT_i$ est déterminé d'après l'expression suivante :

$$WT_i(P_i) = WT_{Max}\left(\frac{P_i}{P_{max}} - 1\right) + \gamma_i \quad \text{(Expression 3)}$$

où $WT_{Max}$ est une constante réelle désignant le temps d'attente maximum allouable à un noeud candidat $WT_{Max} = WT_i(P_i=0)$, $P_i/P_{max}$ désigne la probabilité d'élection normalisée du i$^{ème}$ noeud candidat, et $\gamma_i$ est un nombre réel généré de manière aléatoire.

Le temps $WT_i$ déterminé selon l'expression 3 est d'autant plus court que la probabilité d'être élu $P_i$ est élevée.

De manière avantageuse, l'utilisation du nombre $\gamma_i$ permet à plusieurs noeuds ayant des probabilités d'élection identiques de calculer un temps d'attente $WT_i$ différent. C'est précisément le cas des noeuds 2 et 7 qui ont calculé la même valeur de probabilité $P_2 = P_7$, le nombre aléatoire $\gamma_i$ permettant de les distinguer. Par exemple, en supposant que le nombre aléatoire $\gamma_2$ généré pour le noeud 2 est supérieur au nombre aléatoire $\gamma_7$ généré pour le noeud 7 ($\gamma_7 < \gamma_2$), les noeuds 7, 2 ont des temps d'attente $WT_7$, $WT_2$ distincts, tels que $WT_7 < WT_2$.

Le noeud candidat 3 dont la probabilité d'élection $P(\Delta t_3)$ est la plus faible ($P(\Delta t_3) < P(\Delta t_5) < P(\Delta t_2) = P(\Delta t_7)$) calcule, d'après l'expression 3, un temps d'attente $WT_3$ élevé, tel que $WT_3 > WT_5 > WT_2 > WT_7$.

Dès lors que le temps d'attente $WT_i$ est déterminé, chaque noeud candidat 2, 3, 5, 7 active un compteur initialisé avec sa valeur $WT_i$ et décompte le temps à partir de cette valeur, lors d'une étape de décompte du temps $E_{54}$, tant que le noeud n'est pas notifié de l'élection d'un noeud diffuseur.

Pour cela, lors d'une étape de test $E_{55}$, chaque noeud candidat dont le compteur est activé, vérifie que son temps d'attente $WT_i$ n'est pas écoulé. Si son temps d'attente n'est pas écoulé, le noeud vérifie lors d'une étape de vérification $E_{56}$, s'il a reçu un message de notification M indiquant qu'un noeud diffuseur a été élu, ce qui signifierait qu'un noeud candidat muni d'un temps d'attente plus court aurait déjà été élu noeud diffuseur (étape $E_{58}$). Tant qu'aucun noeud n'a diffusé le paquet de données D et que le temps d'attente $WT_i$ d'un noeud donné n'est pas écoulé, ce noeud réitère les étapes $E_{54}$, $E_{55}$ et $E_{56}$. Si le noeud a reçu un message de notification, le compteur de ce noeud est désactivé et l'étape d'élection $E_5$ prend fin (étape $E_{58}$).

Dès lors que le temps d'attente $WT_i$ d'un noeud donné est écoulé et que le paquet de données D n'a été diffusé par aucun autre noeud jusqu'à cet instant, le noeud en question diffuse à tous ses noeuds voisins un message de notification M indiquant qu'il a acquis le statut de noeud diffuseur (étape $E_{58}$) marquant ainsi la fin de l'étape d'élection $E_5$. En référence à la figure 6, les noeuds candidats 2, 3, 5, reçoivent le message de notification M les informant que le noeud 7 a été élu noeud diffuseur.

Dans l'exemple de la figure 6, le noeud candidat 7 ayant calculé le temps d'attente le plus faible ($WT_7 < WT_2 < WT_5 < WT_3$) est le premier noeud candidat à diffuser le message de notification M. De ce fait, il est élu noeud diffuseur 7. Sur réception du message de notification, les noeuds candidats restants 2, 3, 5 sont informés que le noeud 7 vient d'être élu noeud diffuseur, ce qui met fin à l'étape d'élection $E_5$.

Etant donné que le noeud candidat 7 venant d'être élu est éloigné du point d'ancrage virtuel $C_i$ d'une distance égale au plus à la moitié du rayon de transmission d'un noeud, on notera que celui-ci 7 peut transmettre le message de notification M à tous les noeuds situés dans la zone d'ancrage $A_i$. En particulier, si le noeud 7 s'était trouvé en périphérie de la zone d'ancrage $A_i$ au moment de l'élection, c'est-à-dire à une distance égale à la moitié de la portée de transmission ($R/2$) du centre d'ancrage virtuel $C_i$, celui-ci aurait été apte à informer des noeuds candidats localisés en périphérie de la zone d'ancrage $A_i$ et diamétralement opposés par rapport à ce noeud 7. Dans ce cas limite, la distance séparant le noeud diffuseur élu 7 et les noeuds candidats restants aurait été égale au rayon de transmission d'un noeud.

Lorsque le noeud diffuseur élu 7 arrive au niveau du point d'ancrage $C_i$ de la cellule $Z_i$, il diffuse le paquet de données D à tous les noeuds voisins localisés dans cette cellule.

Les étapes du procédé décrit ci-dessus sont réitérées de sorte qu'un noeud diffuseur élu diffuse le paquet de données D à intervalles de temps régulier. Chaque itération définit un cycle, lors duquel le paquet de données est diffusé par un noeud diffuseur. En élisant à chaque cycle un noeud diffuseur dont le temps estimé pour atteindre le centre d'une intersection est le plus proche possible de l'intervalle de temps de référence T, on émule une infrastructure diffusant les données de manière périodique. Ainsi, l'intersection peut être considérée comme une zone de diffusion à l'intérieur de laquelle les données sont stationnaires.

Pour disséminer des données à travers l'ensemble du réseau routier, il est nécessaire d'assurer la transmission de ces données le long des voies de circulation qui relient les intersections entre elles. A cet effet, la présente invention prévoit une phase de diffusion progressive permettant de diffuser des données entre deux intersections successives, lors de laquelle un paquet de données est diffusé par un ensemble de noeuds diffuseurs élus successivement, au fur et à mesure que le paquet progresse le long d'une voie de circulation reliant les deux intersections successives.

La phase de propagation directionnelle est amorcée par des noeuds mobiles porteurs du paquet de données au niveau d'une intersection courante et se dirigeant en direction d'une intersection voisine, ces noeuds porteurs ayant reçu le paquet de données D préalablement diffusé par un noeud diffuseur dans une cellule de couverture.

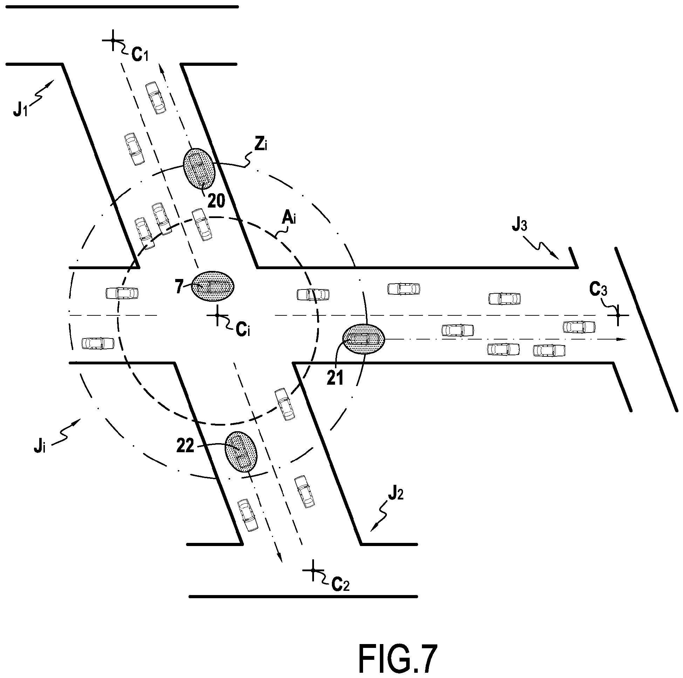

Comme illustré sur la figure 7, le noeud diffuseur 7 localisé au centre de l'intersection $J_i$ a diffusé le paquet de données D à tous ses voisins, et en particulier aux noeuds mobiles périphériques 20, 21, 22 localisés en périphérie de la cellule de couverture $Z_i$ et se déplaçant respectivement en direction d'une intersection voisine $J_1$, $J_3$, $J_2$. Le transfert du paquet de données aux noeuds périphériques 20, 21, 22 permet l'amorçage de la phase de propagation directionnelle vers chaque intersection voisine.

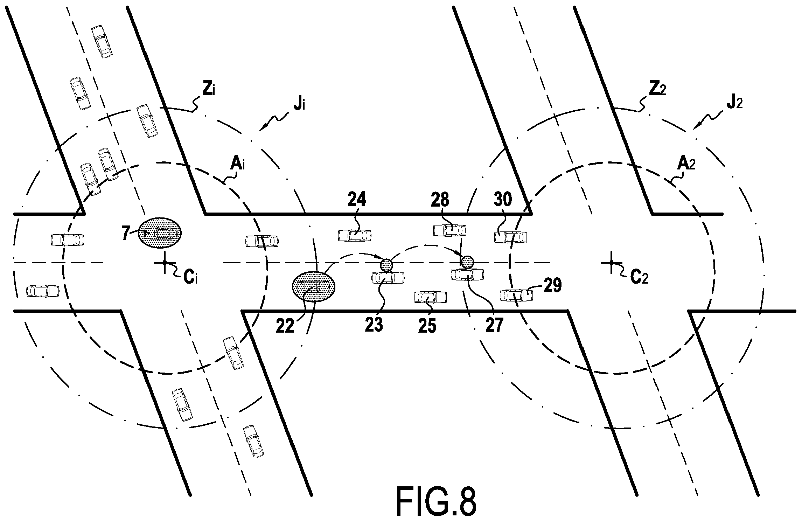

Comme illustré sur la figure 8, le paquet de données D est diffusé progressivement le long de la voie de circulation reliant deux intersections successives $J_i$ et $J_2$, par des noeuds diffuseurs élus 22, 23, 27 successivement lors de la phase de propagation directionnelle.

La phase de propagation directionnelle permettant de propager le paquet de données de l'intersection $J_i$ vers l'intersection $J_2$ est mise en oeuvre selon des algorithmes de diffusion connus de l'homme du métier.

Le terminal de communication sans fil de chaque noeud mobile comprend des moyens d'émission et de réception permettant à chaque noeud de diffuser et de recevoir les paquets de données D et les messages de notification M.

L'appareil de navigation embarqué sur chaque noeud mobile comprend des moyens de traitement (processeur) aptes à effectuer de manière autonome et décentralisée, les étapes et sous-étapes relatives à l'élection d'un noeud diffuseur et décrites ci-avant.

L'appareil de navigation comprend des moyens logiciels aptes à déterminer si le noeud associé à l'appareil de navigation est candidat à la diffusion du paquet de données (moyens de sélection). Dans le cas où le noeud est candidat, l'appareil de navigation comprend en outre des moyens logiciels aptes à déterminer si ce noeud est élu noeud diffuseur (moyens d'élection). Dans le cas où le noeud est élu noeud diffuseur, l'appareil de navigation comprend en outre des moyens logiciels aptes à activer (moyens d'activation) les moyens d'émission du terminal de communication associé lorsque l'appareil de navigation détecte que le noeud se situe à proximité du centre de la cellule.

En particulier, les expressions mathématiques 0, 1, 2, 3 décrites ci-avant sont programmées et sauvegardées dans une mémoire de l'appareil de navigation embarqué, puis exécutées par des moyens de traitement (processeur) associés au noeud

Applications industrielles

Selon un premier exemple d'application, le procédé de diffusion selon l'invention est mis en oeuvre pour disséminer des informations de conditions de trafic utilisées pour optimiser le calcul du trajet d'un véhicule.

Selon un deuxième exemple d'application, le procédé de diffusion selon l'invention est mis en oeuvre pour indiquer en temps réel à un automobiliste des places de parking disponibles aux alentours de sa position actuelle. On suppose que les places disponibles sont identifiées au niveau d'une borne qui diffuse périodiquement ces informations qui sont disséminées à travers les intersections par les véhicules (noeuds mobiles).

Selon un troisième exemple d'application, le procédé de diffusion selon l'invention est mis en oeuvre sur un segment d'autoroute, pour disséminer des informations de sécurité routière dans une zone géographique où a lieu un événement (accident, travaux routiers) qui implique des modifications de circulation (ralentissements, contournements) pour les automobilistes. Dans ce cas, un paquet de données constituant un message d'alerte est généré manuellement ou automatiquement sur le lieu de l'événement. Ce paquet de données est propagé à partir de ce point jusqu'aux intersections avoisinantes où le paquet est diffusé à intervalles de temps réguliers conformément au procédé de diffusion selon l'invention. De cette manière, chaque véhicule (noeud mobile) circulant au niveau des intersections est alerté sur réception du paquet de données en pénétrant dans la zone d'alerte.

**Revendications**

**1.** Procédé de diffusion d'au moins un paquet de données (D) dans un réseau formé par une pluralité de noeuds mobiles (1-7) aptes à se déplacer dans un espace géographique,
ledit procédé comprenant une étape de diffusion locale ($E_9$) au niveau d'une zone prédéterminée ($Z_i$, $Z_1$, $Z_2$, $Z_3$, $Z_4$) dudit espace géographique, appelée cellule, lors de laquelle ledit au moins un paquet de données (D) est diffusé aux noeuds mobiles présents dans ladite cellule,
**caractérisé en ce qu'**il comprend en outre:

    - une étape de réception ($E_1$) dudit au moins un paquet de données (D);
    - une étape de sélection ($E_3$), au cours de laquelle ledit noeud mobile détermine s'il est candidat (2, 3, 5, 7) à la diffusion dudit paquet de données (D) dans ladite cellule ($Z_i$);
    - une étape d'élection ($E_5$) dudit noeud candidat en tant que noeud diffuseur (7) dudit paquet de données (D) dans ladite cellule ($Z_i$), en fonction d'un temps de parcours ($\Delta t_i$) estimé dudit noeud candidat vers le centre ($C_i$)

de ladite cellule ($Z_i$);

et **en ce que** ladite étape de diffusion locale ($E_9$) est mise en oeuvre lorsque ledit noeud diffuseur (7) se situe à proximité du centre ($C_i$) de ladite cellule ($Z_i$).

2. Procédé selon la revendication 1, **caractérisé en ce que**, lors de ladite étape de sélection ($E_3$), ledit noeud mobile détermine qu'il est candidat (2, 3, 5, 7) à la diffusion dudit paquet de données (D), à condition qu'il se dirige vers le centre ($C_i$) de ladite cellule ($Z_i$) et qu'il soit localisé dans une zone d'ancrage ($A_i$) centrée sur ledit centre ($C_i$) et incluse dans la cellule ($Z_i$).

3. Procédé selon la revendication 1, **caractérisé en ce que**, lors de ladite étape d'élection ($E_5$), ledit noeud candidat (2, 3, 5, 7) calcule ($E_{53}$) un temps d'attente ($WT_i$), la valeur du temps d'attente calculée ($WT_2$, $WT_3$, $WT_5$, $WT_7$) étant d'autant plus faible que le temps de parcours estimé ($\Delta t_i$ ; $\Delta t_2$, $\Delta t_3$, $\Delta t_5$, $\Delta t_7$) dudit noeud candidat vers le centre ($C_i$) de ladite cellule ($Z_i$) est proche d'un intervalle de temps de référence (T) prédéterminé, et **en ce que** à l'issue dudit temps d'attente ($WT_i$), ledit noeud candidat diffuse un message de notification (M) informant qu'il est élu ($E_{58}$) noeud diffuseur (7) s'il n'a pas reçu un tel message de notification d'un autre noeud.

4. Procédé selon la revendication 3, **caractérisé en ce que** l'intervalle de temps de référence (T) prédéterminé correspond à la périodicité de ladite étape de diffusion locale ($E_9$).

5. Procédé selon la revendication 3, **caractérisé en ce que** le calcul du temps d'attente ($WT_i$, $WT_2$, $WT_3$, $WT_5$, $WT_7$) est réalisé en outre en fonction d'un nombre $\gamma_i$ généré de manière aléatoire.

6. Procédé selon la revendication 1, **caractérisé en ce que** l'espace géographique est un réseau de circulation comprenant une pluralité de voies de circulation ($L_1$, $L_2$, $L_3$, $L_4$, $L_5$, $L_6$, $L_{12}$, $L_{13}$, $L_{24}$, $L_{34}$) formant entre elles une pluralité d'intersections ($J_1$, $J_2$, $J_3$, $J_4$), et **en ce que** ladite cellule ($Z_1$, $Z_2$, $Z_3$, $Z_4$) est associée à une intersection ($J_1$, $J_2$, $J_3$, $J_4$).

7. Noeud mobile d'un réseau comprenant une pluralité de noeuds mobiles communicants, ledit noeud mobile comprenant :

   - des moyens de réception aptes à recevoir au moins un paquet de données (D);
   - des moyens de diffusion aptes à diffuser ledit au moins un paquet de données (D) à des noeuds mobiles situés à l'intérieur d'une zone de portée dudit noeud;

   le noeud étant **caractérisé en ce qu'**il comporte en outre :

   - des moyens de sélection aptes à déterminer si ledit noeud mobile est candidat à la diffusion dudit paquet de données dans une zone prédéterminée d'un espace géographique associé audit réseau, appelée cellule ($Z_i$);
   - des moyens d'élection aptes à élire le noeud candidat en tant que noeud diffuseur (7) destiné à diffuser ledit au moins un paquet de données (D) dans ladite cellule ($Z_i$), en fonction d'un temps de parcours estimé ($\Delta t_i$) dudit noeud candidat vers le centre ($C_i$) de ladite cellule ($Z_i$);

   et des moyens d'activation aptes à activer lesdits moyens de diffusion lorsque ledit noeud diffuseur (7) se situe à proximité du centre de ladite cellule.

8. Noeud mobile selon la revendication 7, **caractérisé en ce que** lesdits moyens de sélection sont aptes à déterminer que ledit noeud mobile est candidat (2, 3, 5, 7) à la diffusion dudit paquet de données si ledit noeud mobile se dirige vers le centre ($C_i$) de ladite cellule ($Z_i$) et s'il est localisé dans une zone d'ancrage ($A_i$) centrée sur ledit centre et incluse dans la cellule ($Z_i$).

9. Noeud mobile selon la revendication 7, **caractérisé en ce que** lesdits moyens d'élection ($E_5$) comprennent:

   - des moyens de calcul d'un temps d'attente ($WT_2$, $WT_3$, $WT_5$, $WT_7$), la valeur du temps d'attente calculée ($WT_i$) étant d'autant plus faible que le temps de parcours estimé ($\Delta t_i$) dudit noeud candidat vers le centre de ladite cellule est proche d'un intervalle de temps de référence (T) prédéterminé;
   - des moyens de diffusion d'un message de notification informant que ledit noeud candidat est élu noeud diffuseur, lesdits moyens étant activés à l'issue dudit temps d'attente, si ledit noeud candidat n'a pas reçu un tel message de notification d'un autre noeud.

10. Système de communication sans fil comprenant une pluralité de noeuds mobiles, lesdits noeuds se déplaçant selon des voies de circulation d'un réseau de circulation déterminé, ledit système étant **caractérisé en ce que** chaque noeud est un noeud mobile selon la revendication 7.

11. Programme d'ordinateur comportant des instructions pour l'exécution des étapes du procédé de diffusion selon l'une quelconque des revendications 1 à 6, lorsque ledit programme est exécuté par un ordinateur.

12. Support d'enregistrement lisible par un ordinateur sur lequel est enregistré un programme d'ordinateur comprenant des instructions pour l'exécution des étapes du procédé de diffusion selon l'une quelconque des revendications 1 à 6.

**Patentansprüche**

1. Verfahren zur Verbreitung mindestens eines Datenpakets (D) in einem Netzwerk, das von einer Mehrzahl von mobilen Knoten (1 - 7) gebildet ist, die geeignet sind, sich in einem geografischen Raum zu bewegen,
das Verfahren umfassend einen Schritt der lokalen Verbreitung ($E_9$) an einem vorbestimmten Bereich ($Z_i$, $Z_1$, $Z_2$, $Z_3$, $Z_4$) des geografischen Raums, der als Zelle bezeichnet wird, bei welchem das mindestens eine Datenpaket (D) an die mobilen Knoten verbreitet wird, die in der Zelle vorhanden sind,
**dadurch gekennzeichnet, dass** es ferner Folgendes umfasst:

- einen Schritt des Empfangens ($E_1$) des mindestens einen Datenpakets (D);
- einen Schritt des Auswählens ($E_3$), bei welchem der mobile Knoten bestimmt, ob er ein Kandidat (2, 3, 5, 7) für die Verbreitung des Datenpakets (D) in der Zelle ($Z_i$) ist;
- einen Schritt des Wählens ($E_5$) des Kandidaten-Knotens als Verbreiter-Knoten (7) des Datenpakets (D) in der Zelle ($Z_i$) in Abhängigkeit von einer geschätzten Laufzeit ($\Delta t_i$) des Kandidaten-Knotens zum Mittelpunkt ($C_i$) der Zelle ($Z_i$);

und dadurch, dass der Schritt der lokalen Verbreitung ($E_9$) durchgeführt wird, wenn sich der Verbreiter-Knoten (7) in der Nähe des Mittelpunkts ($C_i$) der Zelle ($Z_i$) befindet.

2. Verfahren nach Anspruch 1, **dadurch gekennzeichnet, dass** beim Schritt des Auswählens ($E_3$) der mobile Knoten bestimmt, dass er ein Kandidat (2, 3, 5, 7) für die Verbreitung des Datenpakets (D) ist, vorausgesetzt, dass er sich zum Mittelpunkt ($C_i$) der Zelle ($Z_i$) bewegt und in einem Ankerbereich ($A_i$) lokalisiert ist, der auf den Mittelpunkt ($C_i$) zentriert und in der Zelle ($Z_i$) enthalten ist.

3. Verfahren nach Anspruch 1, **dadurch gekennzeichnet, dass** beim Schritt des Wählens ($E_5$) der Kandidaten-Knoten (2, 3, 5, 7) eine Wartezeit ($WT_i$) berechnet ($E_{53}$), wobei der berechnete Wert der Wartezeit ($WT_2$, $WT_3$, $WT_5$, $WT_7$) umso geringer ist, je näher die geschätzte Laufzeit ($\Delta t_i$ ; $\Delta t_2$, $\Delta t_3$, $\Delta t_5$, $\Delta t_7$) des Kandidaten-Knotens zum Mittelpunkt ($C_i$) der Zelle ($Z_i$) an einem vorbestimmten Bezugszeitintervall (T) liegt, und dadurch, dass bei Ablauf der Wartezeit ($WT_i$) der Kandidaten-Knoten eine Benachrichtigungsnachricht (M) verbreitet, die informiert, dass er als Verbreiter-Knoten (7) gewählt ($E_{58}$) ist, wenn er keine solche Benachrichtigungsnachricht von einem anderen Knoten empfangen hat.

4. Verfahren nach Anspruch 3, **dadurch gekennzeichnet, dass** das vorbestimmte Bezugszeitintervall (T) der Periodizität des Schritts der lokalen Verbreitung ($E_9$) entspricht.

5. Verfahren nach Anspruch 3, **dadurch gekennzeichnet, dass** die Berechnung der Wartezeit ($WT_i$, $WT_2$, $WT_3$, $WT_5$, $WT_7$) ferner in Abhängigkeit von einer Zahl $\gamma_i$ durchgeführt wird, die zufällig erzeugt wird.

6. Verfahren nach Anspruch 1, **dadurch gekennzeichnet, dass** der geografische Raum ein Verkehrsnetz ist, das eine Mehrzahl von Verkehrswegen ($L_1$, $L_2$, $L_3$, $L_4$, $L_5$, $L_6$, $L_{12}$, $L_{13}$, $L_{24}$, $L_{34}$) umfasst, die untereinander eine Mehrzahl von Kreuzungen ($J_1$, $J_2$, $J_3$, $J_4$) bilden, und dadurch, dass die Zelle ($Z_1$, $Z_2$, $Z_3$, $Z_4$) einer Kreuzung ($J_1$, $J_2$, $J_3$, $J_4$) zugeordnet ist.

7. Mobiler Knoten eines Netzwerks umfassend eine Mehrzahl von kommunizierenden mobilen Knoten, der mobile Knoten umfassend:

- Empfangsmittel, die geeignet sind, mindestens ein Datenpaket (D) zu empfangen;
- Verbreitungsmittel, die geeignet sind, das mindestens eine Datenpaket (D) an mobile Knoten zu verbreiten, die sich in innerhalb eines Reichweitenbereichs des Knotens befinden;

wobei der Knoten **dadurch gekennzeichnet ist, dass** er ferner Folgendes aufweist:

- Auswahlmittel, die geeignet sind zu bestimmen, ob der mobile Knoten ein Kandidat für die Verbreitung des Datenpakets in einem vorbestimmten Bereich eines dem Netzwerk zugeordneten geografischen Raums ist, der als Zelle ($Z_i$) bezeichnet wird;
- Wahlmittel, die geeignet sind, den Kandidaten-Knoten als Verbreiter-Knoten (7) zu wählen, der dazu bestimmt ist, das mindestens eine Datenpaket (D) in der Zelle ($Z_i$) in Abhängigkeit von einer geschätzten Laufzeit ($\Delta t_i$) des Kandidaten-Knotens zum Mittelpunkt ($C_i$) der Zelle ($Z_i$) zu verbreiten;

und Aktivierungsmittel, die geeignet sind, die Mittel zur Verbreitung zu aktivieren, wenn sich der Verbreiter-Knoten (7) in der Nähe des Mittelpunkts der Zelle befindet.

**8.** Mobiler Knoten nach Anspruch 7, **dadurch gekennzeichnet, dass** die Auswahlmittel geeignet sind zu bestimmen, dass der mobile Knoten ein Kandidat (2, 3, 5, 7) für die Verbreitung des Datenpakets ist, wenn sich der mobile Knoten zum Mittelpunkt ($C_i$) der Zelle ($Z_i$) bewegt und wenn er in einem Ankerbereich ($A_i$) lokalisiert ist, der auf den Mittelpunkt zentriert und in der Zelle ($Z_i$) enthalten ist.

**9.** Mobiler Knoten nach Anspruch 7, **dadurch gekennzeichnet, dass** die Wahlmittel ($E_5$) Folgendes umfassen:

- Mittel zur Berechnung einer Wartezeit ($WT_2$, $WT_3$, $WT_5$, $WT_7$), wobei der berechnete Wert der Wartezeit ($WT_i$) umso geringer ist, je näher die geschätzte Laufzeit ($\Delta t_i$) des Kandidaten-Knotens zum Mittelpunkt der Zelle an einem vorbestimmten Bezugszeitintervall (T) liegt;
- Mittel zur Verbreitung einer Benachrichtigungsnachricht, die informiert, dass der Kandidaten-Knoten als Verbreiter-Knoten gewählt ist, wobei die Mittel bei Ablauf der Wartezeit aktiviert werden, wenn der Kandidaten-Knoten keine solche Benachrichtigungsnachricht von einem anderen Knoten empfangen hat.

**10.** Drahtloses Kommunikationssystem umfassend eine Mehrzahl von mobilen Knoten, wobei sich die Knoten entsprechend Verkehrswegen eines vorbestimmten Verkehrsnetzes bewegen, wobei das System **dadurch gekennzeichnet ist, dass** jeder Knoten ein mobiler Knoten nach Anspruch 7 ist.

**11.** Computerprogramm umfassend Anweisungen für die Ausführung der Schritte des Verbreitungsverfahrens nach einem der Ansprüche 1 bis 6, wenn das Programm von einem Computer ausgeführt wird.

**12.** Computerlesbares Speichermedium, auf dem ein Computerprogramm gespeichert ist, das Anweisungen für die Ausführung der Schritte des Verfahrens zur Verbreitung nach einem der Ansprüche 1 bis 6 umfasst.

**Claims**

**1.** Method for broadcasting at least one data packet (D) in a network formed by a plurality of mobile nodes (1-7) capable of moving within a geographic space,
said method comprising a step of local broadcasting ($E_9$) in a predetermined zone ($Z_i$, $Z_1$, $Z_2$, $Z_3$, $Z_4$) of said geographic space, called a cell, during which said at least one data packet (D) is broadcast to the mobile nodes present in said cell, **characterized in that** it also comprises:

- a step of reception ($E_1$) of said at least one data packet (D);
- a step of selection ($E_3$), during which said mobile node determines whether it is a candidate (2, 3, 5, 7) for the broadcasting of said data packet (D) in said cell ($Z_i$);
- a step of election ($E_5$) of said candidate node as broadcasting node (7) for said data packet (D) in said cell ($Z_i$) as a function of an estimated time of travel ($\Delta t_i$) of said candidate node to the centre ($C_i$) of said cell ($Z_i$);

and **in that** said local broadcasting step ($E_9$) is implemented when said broadcasting node (7) is situated in proximity to the centre ($C_i$) of said cell ($Z_i$).

2.  Method according to Claim 1, **characterized in that**, during said selection step ($E_3$), said mobile node determines that it is a candidate (2, 3, 5, 7) for the broadcasting of said data packet (D), on condition that it is directed towards the centre ($C_i$) of said cell ($Z_i$) and that it is located in an anchor zone ($A_i$) centred on said centre ($C_i$) and included in the cell ($Z_i$).

3.  Method according to Claim 1, **characterized in that**, during said election step ($E_5$), said candidate node (2, 3, 5, 7) computes ($E_{53}$) a waiting time ($WT_i$), the computed value of the waiting time ($WT_2$, $WT_3$, $WT_5$, $WT_7$) being all the lower when the estimated time of travel ($\Delta t_i$; $\Delta t_2$, $\Delta t_3$, $\Delta t_5$, $\Delta t_7$) of said candidate node to the centre ($C_i$) of said cell ($Z_i$) is close to a predetermined reference time interval (T), and **in that**, at the end of said waiting time ($WT_i$), said candidate node broadcasts a notification message (M) informing that it is elected ($E_{58}$) as broadcasting node (7) if it has not received such a notification message from another node.

4.  Method according to Claim 3, **characterized in that** the predetermined reference time interval (T) corresponds to the periodicity of said local broadcasting step ($E_9$).

5.  Method according to Claim 3, **characterized in that** the computation of the waiting time ($WT_i$, $WT_2$, $WT_3$, $WT_5$, $WT_7$) is performed also as a function of a number $\gamma_i$ generated randomly.

6.  Method according to Claim 1, **characterized in that** the geographic space is a traffic network comprising a plurality of traffic lanes ($L_1$, $L_2$, $L_3$, $L_4$, $L_5$, $L_6$, $L_{12}$, $L_{13}$, $L_{24}$, $L_{34}$) forming between them a plurality of intersections ($J_1$, $J_2$, $J_3$, $J_4$), and **in that** said cell ($Z_1$, $Z_2$, $Z_3$, $Z_4$) is associated with an intersection ($J_1$, $J_2$, $J_3$, $J_4$).

7.  Mobile node of a network comprising a plurality of communicating mobile nodes, said mobile node comprising:

    - reception means capable of receiving at least one data packet (D);
    - broadcasting means capable of broadcasting said at least one data packet (D) to mobile nodes situated within a zone of range of said node;

    the node being **characterized in that** it also comprises:

    - selection means capable of determining whether said mobile node is a candidate for the broadcasting of said data packet in a predetermined zone of a geographic space associated with said network, called a cell ($Z_i$);
    - election means capable of electing the candidate node as broadcasting node (7) intended to broadcast said at least one data packet (D) in said cell ($Z_i$), as a function of the estimated time of travel ($\Delta t_i$) of said candidate node to the centre ($C_i$) of said cell ($Z_i$);

    and activation means capable of activating said broadcasting means when said broadcasting node (7) is situated in proximity to the centre of said cell.

8.  Mobile node according to Claim 7, **characterized in that** said selection means are capable of determining that said mobile node is a candidate (2, 3, 5, 7) for the broadcasting of said data packet if said mobile node is directed towards the centre ($C_i$) of said cell ($Z_i$) and if it is located in an anchoring zone ($A_i$) centred on said centre and included in the cell ($Z_i$).

9.  Mobile node according to Claim 7, **characterized in that** said election means ($E_5$) comprise:

    - means for computing a waiting time ($WT_2$, $WT_3$, $WT_5$, $WT_7$), the computed value of the waiting time ($WT_i$) being all the lower when the estimated time of travel ($\Delta t_i$) of said candidate node to the centre of said cell is close to a predetermined reference time interval (T) ;
    - means for broadcasting a notification message informing that said candidate node is elected broadcasting node, said means being activated at the end of said waiting time, if said candidate node has not received such a notification message from another node.

10. Wireless communication system comprising a plurality of mobile nodes, said nodes moving around on traffic lanes of a predetermined traffic network, said system being **characterized in that** each node is a mobile node according to Claim 7.

11. Computer program comprising instructions for the execution of the steps of the broadcasting method according to any one of Claims 1 to 6, when said program is run by a computer.

12. Computer-readable storage medium on which is stored a computer program comprising instructions for the execution of the steps of the broadcasting method according to any one of Claims 1 to 6.

FIG.1

FIG.2

FIG.3

FIG.4

FIG.5A

FIG.5B

FIG.5C

FIG.6

FIG.7

EP 2 201 814 B1

FIG.8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Urban multihop broadcast protocol for inter-vehicule communication systems. **G. KORKMAZ ; E. EKICI ; F. ÖZGÜNER ; Ü. ÖZGÜNER.** VANET' 04 : Proceedings of the 1st ACM International Workshop on Vehicular Ad Hoc Networks. ACM Press, Septembre 2004, 76-85